# EUROPÄISCHE PATENTSCHRIFT

(11) **EP 0 713 031 B1**
(45) Veröffentlichungstag und Bekanntmachung des Hinweises auf die Patenterteilung: **14.10.1998**
(21) Anmeldenummer: 95113077.2
(22) Anmeldetag: 19.08.1995
(51) Int. Cl.: F16F 15/126

(54) **Torsionsschwingungsdämpfer**
Torsionel vibration damper
Amortisseur de vibration en torsion

(30) Priorität: 17.11.1994 DE 4440885
(43) Veröffentlichungstag der Anmeldung: 22.05.1996
(73) Patentinhaber: Firma Carl Freudenberg, 69469 Weinheim (DE)
(72) Erfinder: Colford, Terry, Queniborough, Leicestershire (GB)

(56) Entgegenhaltungen:
- EP-A- 0 431 242
- EP-A- 0 477 146
- WO-A-91/02176
- DE-A- 4 311 939

## Beschreibung

Die Erfindung betrifft einen Torsionsschwingungsdämpfer nach Oberbegriff des Anspruchs 1. Ein derartiger Dämpfer ist aus der EP-A-431 242 bekannt.

Der Erfindung liegt die Aufgabe zugrunde, einen Torsionsschwingungsdämpfer der eingangs genannten Art derart weiterzuentwickeln, daß dieser wenig Bauraum beansprucht, in seiner Zuverlässigkeit zum Antrieb von Riemen verbessert ist und hinsichtlich seiner Dämpfungseigenschaften weilgehend temperaturunäbhängig arbeitet.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Im Rahmen der vorliegenden Erfindung ist es vorgesehen, daß der Mantel des Nabenrings zumindest radial außenseitig mit einer festhaftenden ersten Beschichtung aus duroplastischem Kunststoff versehen ist und daß die erste Beschichtung eine riemenscheibenförmige Oberflächenprofilierung aufweist. Hierbei ist von Vorteil, daß die erste Beschichtung unmittelbar an den Mantel des Nabenrings angeformt ist und es einer spanabhebenden Bearbeitung eines metallischen Bauteils und/oder komplizierter Umform-Vorgänge zur Herstellung der riemenscheibenförmigen Oberflächenprofilierung nicht bedarf. Durch die Verwendung eines duroplastischen Kunststoffs zur Herstellung der Beschichtung wird erreicht, daß diese, mit darin verteilten Fasern verstärkt, kriechfest und somit auch bei Verwendung in unterschiedlichen Temperaturbereichen formstabil ist. Gelangt der Torsionsschwingungsdämpfer beispielsweise zum Antrieb von Nebenaggregaten einer Verbrennungskraftmaschine zur Anwendung, sind gleichbleibend gute Gebrauchseigenschaften, unabhängig von den während der bestimmungsgemäßen Verwendung auftretenden Temperaturen, auch im langfristigen Gebrauch sichergestellt.

Hinsichtlich einer einfachen Fertigung ist der Nabenring bevorzugt durch ein Tiefziehteil gebildet. Durch das Aufbringen der festhaftenden Beschichtung aus duroplastischem Kunststoff im Anschluß an die Herstellung des Nabenrings, ist dieser eine außerordentlich einfach und kostengünstig herstellbar. Der Nabenring besteht aus dem sich in axialer Richtung erstreckenden, kreisringförmigen Mantel, bei dem eine Stirnseite einen Radialflansch mit zumindest einer Befestigungsvorrichtung aufweist. Der Radialflansch und die Befestigungsvorrichtungen können derart gestaltet sein, daß der Torsionsschwingungsdämpfer an die Kurbelwelle einer Verbrennungskraftmaschine anlegbar ist.

In Hinblick darauf, daß die sich unter dem Einfluß wechselnder Umgebungstemperaturen ergebende Dämpfungswirkung von besserer Konstanz ist, hat es sich als vorteilhaft bewährt, daß auf der der ersten Beschichtung abgewandten Seite des Mantels des Nabenrings eine unmittelbar angeformte zweite Beschichtung angeordnet ist, die aus duroplastischem Kunststoff ohne Faserverstärkung besteht. Bevorzugt ist die erste und die zweite Beschichtung einstückig ineinander übergehend ausgebildet. Die zweite Beschichtung umschließt den Schwungring außenseitig mit radialem Abstand wobei der Federkörper die zweite Beschichtung und den Schwungring unter radialer Vorspannung anliegend berührt. Die anliegende Berührung der zweiten Beschichtung am Federkörper unter radialer Vorspannung hat den Vorteil, daß die Vorspannung im Federkörper auch bei ansteigenden Temperaturen keine nennenswerte Veränderung erfährt. Der sich in einer solchen Situation ergebende Abfall der Federsteifigkeit des Federkörpers steht einer sich vergrößernden Vorspannung desselben gegenüber. Die größere Vorspannung wird dadurch hervorgerufen, daß sich die zweite Beschichtung in radialer Richtung infolge der Erwärmung geringfügig ausdehnt. Die Ausdehnung ist in quantitativer Hinsicht ebenso wie die Verminderung der Federsteifigkeit des Federringes abhängig von den im einzelnen erreichten Temperaturen. Die sich ergebende Dämpfungswirkung ist dadurch weitgehend temperaturunabhängig stets in gleicher Weise verfügbar. Das Verhältnis aus der durchschnittlichen radialen Dicke der zweiten Beschichtung und der radialen Dicke des Federkörpers beträgt bevorzugt 0,25 bis 3.

Der Schwungring besteht bevorzugt aus einem metallischen Werkstoff. Auch Schwungringe mit relativ kleinen Abmessungen können vergleichsweise große Trägheitsmassen aufweisen, was im Hinblick auf eine gute Torsionsschwingungsdämpfung von hervorzuhebendem Vorteil ist.

Die erste und/oder die zweite Beschichtung können aus Epoxid- oder Polyesterharz bestehen. Bei Verwendung von Epoxid- oder Polyesterharzen ist von Vorteil, daß der bevorzugt aus einem tiefgezogenen Blechteil bestehende Nabenring im Bereich seines Mantels durch die fest anhaftende Beschichtung aus duroplastischem Kunststoff eine merkliche Verbesserung seiner Steifigkeit erfährt. Das Stahlblech, aus dem der Nabenring beispielsweise bestehen kann, weist nur eine vergleichsweise geringe Dicke und dadurch bedingt ein vergleichsweise geringes Gewicht auf. Die daraus resultierende Reduzierung des Gesamtgewichts des Nabenrings gestattet es, die Masse des Schwungrings in gleichem Umfang zu vergrößern und hierdurch eine weiter verbesserte Dämpfungswirkung zu erzielen, bezogen auf das Gesamtgewicht des Torsionsschwingungsdämpfers.

Im Hinblick auf einen möglichst geringen Verschleiß und dadurch bedingt gleichbleibend gute Gebrauchseigenschaften des Torsionsschwingungsdämpfers während seiner gesamten Gebrauchsdauer, ist es vorgesehen, daß nur der die erste Beschichtung bildende Kunststoff durch darin verteilte Fasern verstärkt ist, wobei die Fasern aus Textilien, mineralischen oder metallischen Werkstoffen bestehen können. Falls die Fasern von geringer Länge sind, ist eine unmittelbare Einmischung möglich, was die Erzielung einer gleichmäßigen Verteilung vereinfacht.

Sind die Fasern demgegenüber von größerer Länge, kann es vorgesehen sein, daß die Fasern untereinander zu einem eigenfesten Flächengebilde vereint sind. Das Flächengebilde hat beispielsweise die Gestalt eines Gewebes, eines Gewirkes oder-eines Vliesstoffs. Das Flächengebilde sollte sich zweckmäßig in Umfangsrichtung erstrecken. Ist nur die erste Beschichtung, die die Riemenscheibe bildet, durch Fasern oder ein Flächengebilde aus Fasern verstärkt, sind die Formänderungen über den gesamten Temperaturbereich vernachlässigbar gering und bewirken dadurch keine nachteiligen Gebrauchseigenschaften im Hinblick auf unerwünschte Veränderungen des Übersetzungsverhältnisses des Riementriebs. Ist die zweite Beschichtung nicht mit Fasern verstärkt ist von Vorteil, daß durch die Wärmedehnung und die daraus resultierende Erhöhung der Vorspannung auf den Federkörper dessen mit zunehmender Temperatur geringer werdende Federsteifigkeit in guter Weise kompensiert werden kann.

Die einander zugewandten Oberflächen von Schwungring und zweiter Beschichtung in axialer Richtung können glockenkurvenförmig und kongruent ausgebildet sein. Durch die glockenkurvenförmige Ausgestaltung wird eine relativ vergrößerte Oberfläche erzielt, wodurch eine Steigerung der übertragbaren Kräfte bewirkt wird.

Ferner bewirkt eine solche Geometrie eine verbesserte Abstützung des Stützrings bezogen auf die zweite Beschichtung in axialer Richtung.

Der Mantel, die zweite Beschichtung, der Federkörper und die dem Federkörper zugewandte Oberfläche des Schwungrings können in Umfangsrichtung jeweils eine übereinstimmende sinusförmige Wellung aufweisen. Neben einer Vergrößerung der für eine sichere Anbindung der Beschichtung benötigten Haftfläche resultiert hieraus eine deutliche Steigerung der Formbeständigkeit des Nabenrings. Die Dicke des für die Herstellung des Nabenrings benötigten Ausgangsmaterials läßt sich dadurch weiter reduzieren.

Um die Herstellung des beanspruchten Torsionsschwingungsdämpfers zu vereinfachen, kann der Mantel mit Ausnehmungen versehen sein, die beispielsweise durch Stanzen oder Bohren erzeugt sein können. Nach dem Eindringen der in flüssigem Zustand angeformten Beschichtung in die Ausnehmungen erfolgt eine formschlüssige Verkrallung der beiden Beschichtungen mit dem Mantel. Gelangen radial innen- und außenseitig des Mantels insgesamt zwei Beschichtungen zur Anwendung, ergibt sich durch die Sandwichstruktur eine besonders gute Formbeständigkeit des Nabenrings.

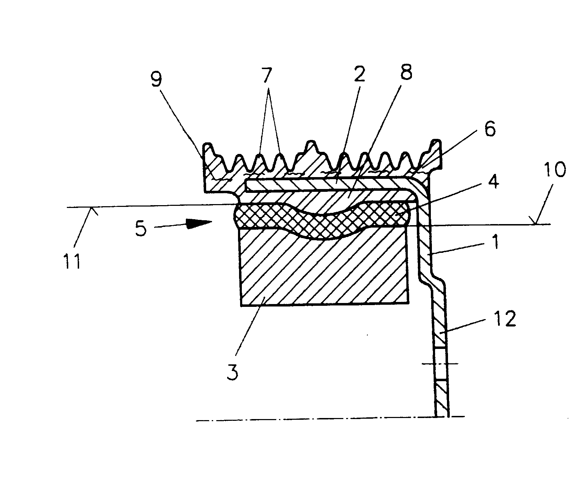

Der Gegenstand der Erfindung wird nachfolgend anhand der beigefügten Zeichnung weiter erläutert. Diesezeigt ein Ausführungsbeispiel des erfindungsgemäßen Torsionsschwingungstilgers in längsgeschnittener Darstellung.

In der Zeichnung ist ein Torsionsschwingungsdämpfer gezeigt, der mit einer integrierten Riemenscheibe versehen ist, die einen einstückigen Bestandteil des Nabenrings 1 bildet. Der Nabenring 1 besteht aus einem Tiefziehteil aus metallischem Werkstoff und ist, im Querschnitt betrachtet, im wesentlichen topfförmig ausgebildet. Der Mantel 2 geht in axialer Richtung einerseits in den Radialflansch 12 es Nabenrings 1 über, wobei der Radialflansch 12 einer hier nicht dargestellten Kurbelwelle einer Verbrennungskraftmaschine anfianschbar ist. Der Mantel 2 weist radial außen- und innenseitig eine erste und zweite Beschichtung 6, 8 auf, die beide aus einem duroplastischen Kunststoff bestehen und unmittelbar an den Mantel 2 angeformt sind. Die erste Beschichtung 6 weist radial außenseitig eine riemenscheibenförmige Oberflächenprofilierung 7 auf. Der auf den Torsionsschwingungsdämpfer aufgelegte Riemen kann beispielsweise zum Antrieb von Nebenaggregaten der Verbrennungskraftmaschine vorgesehen sein. Die erste Beschichtung 6 und die zweite Beschichtung 8 sind materialeinheitlich und einstückig ineinander übergehend ausgebildet. Die von dem Radialflansch 12 abgewandte Stirnseite des Mantels 2 ist vom duroplastischen Kunststoff der beiden Beschichtungen 6, 8 umschlossen. Der Nabenring 1 ist als Riemenscheibe ausgebildet. Der Mantel 2 mit den unmittelbar angeformten Beschichtungen 6, 8 umschließt den Schwungring 3 unter Zwischenfügung des Federkörpers 4 radial außenumfangsseitig konzentrisch. Die zweite Beschichtung 8 weist eine radial nach innen gerichtete Vorwölbung auf, die im wesentlichen glockenkurvenförmig ausgebildet ist. Eine zur Oberfläche 10 des Schwungrings 3 kongruent gestaltete, umfangsseitig umlaufende Vertiefung ist auf der dem Mantel 2 zugewandten Oberfläche 11 der zweiten Beschichtung 8 vorgesehen.

In dem hier gezeigten Ausführungsbeispiel ist es vorgesehen, daß nur der die erste Beschichtung 6 bildende Kunststoff durch darin verteilte Fasern 9 verstärkt ist, wobei die Fasern 9 untereinander zu einem eigenfesten Flächengebilde vereint sind. Die zweite Beschichtung 8 ist demgegenüber nicht faserverstärkt. Hierbei ist von Vorteil, daß einerseits die erste Beschichtung 6 unabhängig von den während des Betriebs des Torsionsschwingungsdämpfers auftretenden Temperaturen formstabil bleibt. Veränderungen der Geometrie der ersten Beschichtung 6 sind ausgeschlossen, was im Hinblick auf eine gleichbleibende Übersetzung und gleichbleibend gute Gebrauchseigenschaften während des Betriebs von hervorzuhebender Bedeutung ist. Um die Vorspannung im Federkörpern auch bei ansteigenden Temperaturen ohne nennenswerte Veränderung weitgehend konstant zu halten, ist die zweite Beschichtung 8 ohne Faserverstärkung ausgeführt, so daß sich der in einer solchen Situation ergebende Abfall der Federsteifigkeit des Federkörpers 4 durch eine sich vergrößernde Vorspannung kompensiert wird. Die vergrößerte Vorspannung beruht auf einer radialen Aufweitung der zweiten Beschichtung 8 bei ansteigenden Temperaturen. Die Dämpfungseigenschaften des Torsionsschwingungsdämpfers sind dadurch weitgehend temperaturunabhängig und stets in gleicher Weise verfügbar.

## Patentansprüche

1. Torsionsschwingungsdämpfer, umfassend einen im wesentlichen topfförmigen Nabenring (1) aus metallischem Werkstoff mit kreisringförmigem Mantel (2) und einen Schwungring (3), die einander mit radialem Abstand benachbart zugeordnet und durch einen Federkörper (4) aus elastomerem Werkstoff drehelastisch verbunden sind, wobei der Federkörper in dem durch den Abstand gebildeten Spalt angeordnet ist, und wobei der Mantel (2) des Nabenrings (1) zumindest radial außenseitig mit einer festhaftenden ersten Beschichtung (6) aus duroplastischem Kunststoff versehen ist, wobei auf der der ersten Beschichtung (6) abgewandten Seite des Mantels (2) des Nabenrings (1) eine unmittelbar angeformte zweite Beschichtung (8) angeordnet ist, die aus duroplastischem Kunststoff besteht und wobei die erste Beschichtung (6) eine riemenscheibenförmige Oberflächenprofilierung (7) aufweist, **dadurch gekennzeichnet**, daß die zweite Beschichtung (8) den Schwungring (3) außenseitig mit radialem Abstand umschließt, daß der die erste Beschichtung (6) bildende Kunststoff derart durch darin verteilte Fasern (9) verstärkt ist, daß die Beschichtung (6) unabhängig von den während des Betriebs auftretenden Temperaturen formstabil bleibt, und daß der die zweite Beschichtung (8) bildende Kunststoff nicht faserverstärkt ist.

2. Torsionsschwingungsdämpfer nach Anspruch 1, dadurch gekennzeichnet, daß der Nabenring (1) durch ein Tiefziehteil gebildet ist.

3. Torsionsschwingungsdämpfer nach Anspruch 1 oder 2, dadurch gekennzeichnet, daß die erste und die zweite Beschichtung (6, 8) einstückig ineinander übergehend ausgebildet sind.

4. Torisonsschwingungsdämpfer nach einem der Ansprüche 1 bis 3, dadurch gekennzeichnet, daß der Federkörper (4) die zweite Beschichtung (8) und den Schwungring (3) unter radialer Vorspannung anliegend berührt.

5. Torsionsschwingungsdämpfer nach Anspruch 4, dadurch gekennzeichnet, daß der Schwungring (3) aus metallischem Werkstoff besteht.

6. Torisonsschwingungsdämpfer nach einem der Ansprüche 1 bis 5, dadurch gekennzeichnet, daß die erste und/oder die zweite Beschichtung (6, 8) aus Epoxid- oder Polyersterharz besteht.

7. Torsionsschwingungsdämpfer nach einem der Ansprüche 1 bis 6, dadurch gekennzeichnet, daß die Fasern (9) untereinander zu einem eigenfesten Flächengebilde vereint sind.

8. Torsionsschwingungsdämpfer nach einem der Ansprüche 1 bis 7, dadurch gekennzeichnet, daß die einander zugewandten Oberflächen (10, 11) von Schwungring (3) und zweiter Beschichtung (8) in axialer Richtung glockenkurvenförmig und kongruent ausgebildet sind.

9. Torsionsschwingungsdämpfer nach einem der Ansprüche 1 bis 8, dadurch gekennzeichnet, daß der Mantel (2), die zweite Beschichtung (8), der Federkörper (4) und die dem Federkörper (4) zugewandte Oberfläche (10) des Schwungrings (3) in Umfangsrichtung jeweils eine übereinstimmende sinusförmige Wellung aufweisen.

## Claims

1. A torsional vibration damper, comprising an essentially cup-shaped hub ring (1) made of a metallic material with a circular shell (2) and a ring flywheel (3), which are arranged adjacent to one another with radial spacing and are connected in a torsionally elastic manner by means of a spring element (4) made of an elastomer material, the spring element being arranged in the gap formed by the spacing, and the shell (2) of the hub ring (1) being provided, at least on the radially outer side, with a firmly adhering first coating (6) made of a thermosetting plastic, a directly moulded-on second coating (8) which consists of a thermosetting plastic being arranged on the side of the shell (2) of the hub ring (1) remote from the first coating (6), and the first coating (6) having a pulley-like surface profile (7), characterized in that the second coating (8) encompasses the ring flywheel (3) on the outer side with radial spacing, in that the plastic which forms the first coating (6) is reinforced by means of fibres (9) distributed therein in such a way that the coating (6) remains dimensionally stable regardless of the temperatures occurring during operation, and in that the plastic which forms the second coating (8) is not reinforced by fibres.

2. A torsional vibration damper according to claim 1, characterized in that the hub ring (1) is formed by a deep-drawn part.

3. A torsional vibration damper according to either of claims 1 or 2, characterized in that the first and the second coatings (6, 8) are configured to merge integrally into one another.

4. A torsional vibration damper according to any one of claims 1 to 3, characterized in that the spring element (4) touches the second coating (8) and the ring flywheel (3), resting against them with radial prestress.

5. A torsional vibration damper according to claim 4, characterized in that the ring flywheel (3) consists of a metallic material.

6. A torsional vibration damper according to any one of claims 1 to 5, characterized in that the first and/or the second coating (6, 8) consists of epoxy or polyester resin.

7. A torsional vibration damper according to any one of claims 1 to 6, characterized in that the fibres (9) are combined with one another to form an inherently firm surface structure.

8. A torsional vibration damper according to any one of claims 1 to 7, characterized in that the mutually facing surfaces (10, 11) of the ring flywheel (3) and the second coating (8) are configured to be bell-shaped and congruent in the axial direction.

9. A torsional vibration damper according to any one of claims 1 to 8, characterized in that the shell (2), the second coating (8), the spring element (4) and the surface (10) of the ring flywheel (3) facing the spring element (4) each have a matching sinusoidal undulation in the circumferential direction.

## Revendications

1. Amortisseur de vibration en torsion, comprenant une frette de roue (1) ayant essentiellement la forme d'un pot, formée d'un matériau métallique et pourvue d'une enveloppe (2) en forme de couronne, et une bague volante (3), qui sont conjuguées voisines l'une de l'autre avec une distance radiale et sont reliées de manière élastique permettant une torsion par un corps élastique (4) en matière élastomère, le corps élastique étant situé dans la fente formée par la distance et l'enveloppe (2) de la frette de roue (1) étant pourvue, au moins sur son côté extérieur dans le sens radial, d'un premier revêtement adhérent (6) fait d'une matière plastique thermodurcissable, un second revêtement (8) fait d'une matière plastique thermodurcissable étant formé directement sur le côté de l'enveloppe (2) de la frette de roue (1) éloigné du premier revêtement (6), et le premier revêtement (6) étant pourvu d'un profilage superficiel (7) en forme de poulie, caractérisé en ce que le second revêtement (8) entoure la bague volante (3) sur le côté extérieur avec une distance radiale, en ce que la matière plastique formant le premier revêtement (6) est renforcée par des fibres (9) réparties à l'intérieur de manière à ce que le revêtement (6) garde une forme stable indépendamment des températures survenant pendant la marche, et en ce que la matière plastique formant le second revêtement (8) n'est pas renforcée par des fibres.

2. Amortisseur de vibration en torsion selon la revendication 1, caractérisé en ce que la frette de roue (1) est formée par une pièce fabriquée par emboutissage profond.

3. Amortisseur de vibration en torsion selon l'une des revendications 1 ou 2, caractérisé en ce que les premier et second revêtements (6, 8) sont exécutés de manière à se confondre.

4. Amortisseur de vibration en torsion selon l'une des revendications 1 à 3, caractérisé en ce que le corps élastique (4) est en contact étroit avec le second revêtement (8) et avec la bague volante (3) sous l'effet d'une précontrainte radiale.

5. Amortisseur de vibration en torsion selon la revendication 4, caractérisé en ce que la bague volante (3) est formée d'un matériau métallique.

6. Amortisseur de vibration en torsion selon l'une des revendications 1 à 5, caractérisé en ce que le premier et/ou le second revêtement/s (6, 8) est/sont formé/s de résine époxy ou de résine polyester.

7. Amortisseur de vibration en torsion selon l'une des revendications 1 à 6, caractérisé en ce que les fibres (9) sont unies entre elles de manière à former une structure textile de forme stable.

8. Amortisseur de vibration en torsion selon l'une des revendications 1 à 7, caractérisé en ce que les surfaces (10, 11) de la bague volante (3) et du second revêtement (8) tournées l'une vers l'autre sont exécutées de manière à avoir la forme d'une courbe en cloche et à être congruentes dans la direction axiale.

9. Amortisseur de vibration en torsion selon l'une des revendications 1 à 8, caractérisé en ce que l'enveloppe (2), le second revêtement (8), le corps élastique (4) et la surface (10) de la bague volante (3) située sur le côté du corps élastique (4) présentent chacun, dans la direction circonférentielle, une forme ondulée sinusoïdale concordante.
